# EUROPEAN PATENT SPECIFICATION

(11) **EP 2 278 650 B1**
(45) Date of publication and mention of the grant of the patent: **26.02.2014**
(21) Application number: 09734655.5
(22) Date of filing: 08.04.2009
(51) Int. Cl.: H01M 8/04, H01M 8/06, H01M 8/12

(54) **METHOD FOR OPERATING INDIRECT INTERNAL REFORMING SOLID OXIDE FUEL CELL SYSTEM**
VERFAHREN FÜR DEN BETRIEB EINES FESTOXIDBRENNSTOFFZELLENSYSTEMS MIT INDIREKTEM INTERNEM REFORMER
PROCÉDÉ D'EXPLOITATION D'UN SYSTÈME DE PILE À COMBUSTIBLE À OXYDE SOLIDE À REFORMAGE INTERNE INDIRECT

(30) Priority: 24.04.2008 JP 2008113698
(43) Date of publication of application: 26.01.2011
(73) Proprietor: JX Nippon Oil & Energy Corporation, Chiyoda-ku Tokyo 100-8162 (JP)
(72) Inventor: YOKOYAMA, Shou, Chiyoda-ku, Tokyo 100-8162, (JP); MIZUNO, Yasushi, Chiyoda-ku, Tokyo 100-8162, (JP); ISHIDA, Tomotaka, Chiyoda-ku, Tokyo 100-8162, (JP)
(74) Representative: Hamer, Christopher K.
(86) International application number: PCT/JP2009/057222
(87) International publication number: WO 2009/131010

(56) References cited:
- EP-A1- 1 703 577
- WO-A1-2005/057705
- JP-A- 2002 289 226
- JP-A- 2005 190 802
- JP-A- 2006 073 218
- JP-A- 2007 179 884
- JP-A- 2007 179 885
- US-A- 3 718 506
- US-A1- 2006 046 109
- STILLER ET AL: "Control strategy for a solid oxide fuel cell and gas turbine hybrid system", 14 July 2006 (2006-07-14), JOURNAL OF POWER SOURCES, ELSEVIER SA, CH, PAGE(S) 303 - 315, XP005506406, ISSN: 0378-7753 * page 305 - page 309; figures 1, 5 *

## Description

### Technical Field

The present invention relates to an indirect internal reforming solid oxide fuel cell system equipped with an indirect internal reforming solid oxide fuel cell including a reformer near a fuel cell.

### Background Art

Usually, a hydrogen-containing gas (reformed gas) generated by reforming a hydrocarbon-based fuel (reforming raw material), such as kerosene and city gas, in a reformer is supplied to a solid oxide fuel cell (hereinafter sometimes referred to as SOFC). In the SOFC, electric power is generated by electrochemically reacting this reformed gas and air. The SOFC is usually operated at a high temperature of 550°C to 1000°C.

Various reactions, such as steam reforming and partial oxidation reforming, are used for reforming. Each of them requires a certain temperature or higher. Therefore, an indirect internal reforming SOFC has been developed in which a reformer is installed near an SOFC (at a position where the reformer receives thermal radiation from the SOFC), and the reformer is heated by radiant heat from the SOFC (see Patent Document 1). Also, in an indirect internal reforming SOFC, an anode off-gas (a gas discharged from the anode of the SOFC) containing a combustible component is combusted in an enclosure (module container) of the indirect internal reforming SOFC, and the reformer is heated using the combustion heat as a heat source (see Patent Document 2).

Not just in SOFCs, but in fuel cells, load following operation may be performed. In other words, the electric power generation output value may be varied according to an electric power requirement value from a consumer. Therefore, methods for controlling the output of a fuel cell with respect to a requested electric power value are studied (see Patent Documents 3 and 4).

Patent Document 3 describes a fuel cell electric power generation system including a fuel processing apparatus for reforming a reforming raw material to produce a fuel gas containing hydrogen as a main component, a fuel cell for generating electric power using the above fuel gas, an electric power generation amount measuring means for measuring the amount of electric power generation of the fuel cell, and a control part for controlling the speed of increase of the amount of electric power generation according to the amount of electric power generation measured by the electric power generation amount measuring means, when increasing the amount of electric power generation. This art aims to provide a method for generating electric power by a fuel cell, in which the stability during switching from low load operation to high load operation and during start-up is improved, and the switching time and the start-up time can be reduced.

Patent Document 4 describes controlling electric power generation according to a convergent type requested electric power following method in which a tentative electric current value or a tentative voltage value is calculated according to a requested electric power value, whether or not an effective electric power value corresponds to the requested electric power value suitably enough is determined after such a tentative electric current value or tentative voltage value is set, and the tentative electric current value or the tentative voltage value is appropriately increased or decreased when the effective electric power value does not correspond to the requested electric power value suitably enough. This art aims to provide a fuel cell system in which electric power generation can be controlled by controlling the fuel gas feed rate and the oxygen gas feed rate suitably enough, according to a requested electric power value, without installing a heating means for maintaining the temperature inside the electric power generation and combustion chamber substantially constant, and therefore without unnecessarily increasing the initial equipment cost and the operation cost.

EP 1703577 A1 discloses a fuel cell power generation system which has no assist combustion system and methods for starting and controlling the operation of said fuel cell power generation system.

### Prior Art Document

### Patent Document

Patent Document 1: JP2002-358997A
Patent Document 2: JP2004-319420A
Patent Document 3: JP2003-223911A
Patent Document 4: JP2005-285433A

### Summary of the Invention

### Problems to be Solved by the Invention

In an indirect internal reforming SOFC system, in a case where the electric power generation output value is increased according to a requested electric power value from a consumer, when the amount of electric power generation is instantaneously increased largely, the amount of combustion in the combustion region decreases, and the combustion heat generated in the combustion region becomes small. Therefore, the temperature of the reformer may decrease rapidly. When the temperature of the reformer decreases, the reformer cannot maintain the temperature required for reforming the fuel, and therefore, it is feared that unreformed fuel enters the cell and adversely affects the cell.

For example, in the cases of steam reforming and autothermal reforming in which an endothermic reaction is dominant, even if an attempt is made to address this fear by increasing the fuel input simultaneously with the increase of the electric power generation output value to increase the amount of reforming, the increase of the amount of reforming temporarily accelerates the decrease of the reformer temperature, before the temperature of the reformer is recovered by the increase of the amount of combustion in the combustion region, and the reformer temperature may fall below a reformer temperature desired to be maintained. On the other hand, in the case of a system using partial oxidation reforming in which an exothermic reaction is dominant, the reformer temperature may locally increase significantly by the increase of the amount of combustion on the reforming catalyst.

Not only when the electric power generation output value of the SOFC is increased, but also when the operation is continued with the electric power generation output value fixed, the temperature of the reformer may decreases due to some cause. Also in such a case, it is desired to avoid that unreformed fuel flows into the interior of the SOFC, or avoid that the reformer temperature locally increases significantly.

It is an object of the present invention to provide a method for operating an indirect internal reforming SOFC system, in which the temperature of a reformer can be maintained stably and suitably.

### Means for Solving the Problems

The present invention provides the following methods for operating an indirect internal reforming solid oxide fuel cell system.
1) A method for operating an indirect internal reforming solid oxide fuel cell system including
   a reformer including a reforming catalyst layer, for producing a reformed gas from a hydrocarbon-based fuel,
   a solid oxide fuel cell for generating electric power using the reformed gas obtained in the reformer, and
   a combustion region for combusting an anode off-gas discharged from the solid oxide fuel cell,
   wherein the reformer is disposed at a position where the reformer can receive combustion heat generated in the combustion region and heat from the solid oxide fuel cell,
   the method including a step of controlling a temperature of the reforming catalyst layer by changing an electric power generation output value of the solid oxide fuel cell, and
   the method including a step of increasing a temperature of the reforming catalyst layer by setting an electric power generation output value of the solid oxide fuel cell to a value lower than a constant value when the temperature of the reforming catalyst layer falls below a lower limit temperature required for the reforming, in a case where the electric power generation output value of the solid oxide fuel cell is scheduled to be set to the constant value.
2) A method for operating an indirect internal reforming solid oxide fuel cell system including
   a reformer including a reforming catalyst layer, for producing a reformed gas from a hydrocarbon-based fuel,
   a solid oxide fuel cell for generating electric power using the reformed gas obtained in the reformer, and
   a combustion region for combusting anode off-gas discharged from the solid oxide fuel cell,
   wherein the reformer is disposed at a position where the reformer can receive combustion heat generated in the combustion region and heat from the solid oxide fuel cell,
   the method including a step of increasing a temperature of the reforming catalyst layer by keeping an electric power generation output value of the solid oxide fuel cell at an electric power generation output value P* which is obtained when the temperature of the reforming catalyst layer falls below a lower limit temperature required for the reforming, or by setting the electric power generation output value of the solid oxide fuel cell to a value lower than the electric power generation output value P* when the temperature of the reforming catalyst layer falls below the lower limit temperature required for the reforming, in a case where the electric power generation output value of the solid oxide fuel cell is scheduled to be increased with time.
3) The method according to 1) or 2), including increasing the electric power generation output value of the solid oxide fuel cell when the temperature of the reforming catalyst layer becomes equal to or higher than a temperature, that is obtained by adding a predetermined temperature margin to the lower limit temperature, by the above-mentioned step of increasing the temperature of the reforming catalyst layer.

### Advantages of the Invention

The present invention provides a method for operating an indirect internal reforming SOFC system, in which the temperature of a reformer can be maintained stably and suitably.

### Brief Description of the Drawings

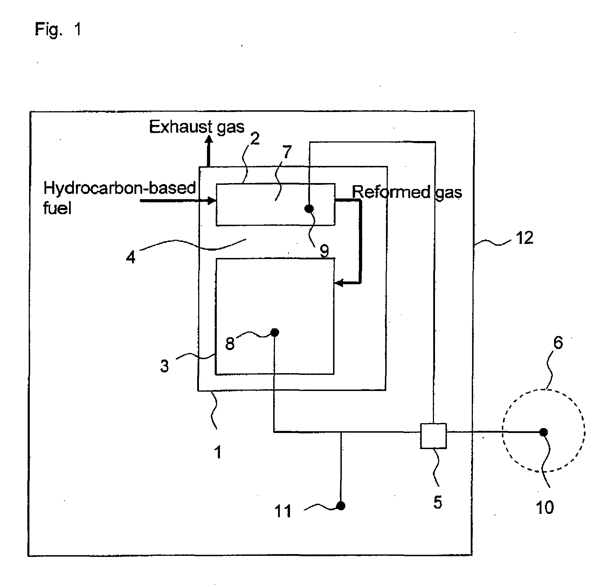

Figure 1 is a schematic diagram showing the outline of an indirect internal reforming SOFC system to which the present invention can be applied.

### Embodiments for Carrying Out the Invention

Embodiments of the present invention will be described below, using drawings, but the present invention is not limited thereto.

### [Indirect Internal Reforming SOFC]

An embodiment of an indirect internal reforming SOFC system to which the present invention can be applied is schematically shown in Figure 1.

The indirect internal reforming SOFC includes a reformer 2 for producing a reformed gas from a hydrocarbon-based fuel. The reformer houses a reforming catalyst layer 7. Also, the indirect internal reforming SOFC includes an SOFC 3 for generating electric power using the reformed gas obtained in the reformer 2, and includes a combustion region 4 for combusting anode off-gas discharged from the SOFC. These reformer, SOFC, and combustion region are housed in an enclosure 1. The reformer is disposed at a position where the reformer can receive combustion heat generated in the combustion region and heat from the solid oxide fuel cell 3.

A hydrocarbon-based fuel is supplied to the reformer. At this time, an oxygen-containing gas (air or the like) and steam are also supplied to the reformer, as required. A reformed gas obtained from the reformer is supplied to the anode of the SOFC. The anode off-gas discharged from the anode can be combusted in the combustion region.

On the other hand, apart from the indirect internal reforming SOFC system, there exists an external electric power demand site 6. Here, an external demand electric power sensing means 10 for sensing an electric power requirement value, that is, demand electric power, for the SOFC is provided. The term "external" here means external to the solid oxide fuel cell system.

Also, an auxiliary machinery room housing auxiliary machinery, such as a blower, and the like is appropriately provided in the interior of the solid oxide fuel cell system 12. Apart from the external electric power demand site, there is electric power demand also in the auxiliary machinery, and an internal demand electric power sensing means 11 for sensing this electric power demand is provided. The term "internal" here means internal to the solid oxide fuel cell system.

A reforming catalyst layer temperature sensing means 9 for sensing the temperature of the reforming catalyst layer is provided in the reformer. A single or a plurality of the reforming catalyst layer temperature sensing means may be provided. A publicly known sensor, such as a thermocouple, that can sense the temperature of the reforming catalyst layer may be appropriately used as this temperature sensing means.

For example, the highest temperature in the reforming catalyst layer may be used as the reforming catalyst layer temperature to be controlled. In order to do this, it is possible to provide a plurality of temperature sensing means in the reforming catalyst layer along the gas flow direction and use the highest temperature among a plurality of temperatures measured by these as the temperature to be controlled.

The SOFC is equipped with an SOFC electric power generation output value sensing means 8 for sensing the amount of electric power generated by the SOFC (an electric power generation output value).

The sensed demand electric power, reforming catalyst layer temperature, and electric power generation output value are all sent as signals to an SOFC output controlling means 5. The SOFC output controlling means 5 controls the electric power generation output of the SOFC, using these signals. A publicly known control means used for control in an indirect internal reforming SOFC or an SOFC system, such as a computer for control, a sequencer, and an inverter, may be appropriately used as the SOFC output controlling means.

In the present invention, the temperature of the reforming catalyst layer is controlled by changing the electric power generation output value of the SOFC. According to this, it is possible to maintain the temperature of the reformer stably and suitably. In order to change the electric power generation output value, the sweep current of the SOFC may be manipulated. When the voltage of the SOFC is sensed, the electric power generation output value can be calculated from the voltage and the sweep current.

More specifically, the following two embodiments may be mentioned.

### [First Embodiment]

This embodiment relates to a case where the electric power generation output value (P) of the SOFC is expected to be set to a constant value (P^{c}). In this embodiment, when the temperature (T) of the reforming catalyst layer falls below a lower limit temperature (T^{L}) required for the reforming, which is determined by reforming conditions such as fuel species and space velocity, a step (a reforming catalyst layer temperature increasing step in the first embodiment) of increasing the temperature of the reforming catalyst layer by setting the electric power generation output value (P) of the solid oxide fuel cell to a value lower than the above-mentioned constant value (P^{c}) is performed.

When the temperature (T) of the reforming catalyst layer becomes equal to or higher than a temperature (T^{L} + ΔT), obtained by adding a predetermined temperature margin (ΔT, where ΔT > 0) to the above-mentioned lower limit temperature (T^{L}), by this reforming catalyst layer temperature increasing step, a step of increasing the electric power generation output value of the SOFC may be performed. The electric power generation output value of the SOFC may be returned to the above-mentioned constant value (P^{c}) by this step.

For example, when the reforming catalyst layer temperature (T) falls below the lower limit temperature (T^{L}) (here, let T^{L}= 650°C), the electric power generation output value may be decreased by a certain amount (here, let this amount be 10%) (that is, the electric power generation output value may be set to 0.9 P^{c}). Then, when the reforming catalyst layer temperature becomes equal to or higher than T^{L} + ΔT (here, let T^{L} + ΔT = 655°C, that is, let ΔT = 5°C), the electric power generation output value may be returned to the former value (that is, set to the above constant value P^{c}). When the reforming catalyst layer temperature does not become equal to or higher than T^{L} + ΔT even if the electric power generation output value is decreased by 10%, the electric power generation output value may be further decreased. This operation may be repeated any number of times until the reforming catalyst layer temperature recovers.

### [Second Embodiment]

This embodiment relates to a step of increasing the electric power generation output value (P) of the SOFC when the electric power generation output value of the SOFC is expected to be increased with time, that is, when the electric power demand is higher than the electric power generation output value. In this embodiment, when the temperature (T) of the reforming catalyst layer falls below the lower limit temperature (T^{L}) required for the reforming, a step (a reforming catalyst layer temperature increasing step in the second embodiment) of increasing the temperature of the reforming catalyst layer by keeping the electric power generation output value of the solid oxide fuel cell at an electric power generation output value (P*) obtained when the temperature of the reforming catalyst layer falls below the lower limit temperature required for the reforming, or by setting the electric power generation output value of the solid oxide fuel cell to a value lower than this electric power generation output value P* (for example, setting to 0.9 P*), is performed.

When the temperature (T) of the reforming catalyst layer becomes equal to or higher than a temperature (T^{L} + ΔT), obtained by adding a predetermined temperature margin (ΔT) to the above-mentioned lower limit temperature (T^{L}), by this reforming catalyst layer temperature increasing step, the step of increasing the electric power generation output value of the SOFC may be performed again. In other words, as long as the reforming catalyst layer temperature is maintained at T^{L} + ΔT, it is possible to increase the electric power generation output value according to the electric power demand.

### [Hydrocarbon-based Fuel]

It is possible to use a hydrocarbon-based fuel appropriately selected from compounds of which molecules contain carbon and hydrogen (may also contain other elements, such as oxygen) or mixtures thereof that are publicly known as raw materials of reformed gas in the field of SOFCs. It is possible to use compounds of which molecules contain carbon and hydrogen, such as hydrocarbons and alcohols. For example, hydrocarbon fuels, such as methane, ethane, propane, butane, natural gas, LPG (liquefied petroleum gas), city gas, gasoline, naphtha, kerosene, and gas oil, alcohols, such as methanol and ethanol, ethers, such as dimethyl ether, and the like may be used.

Particularly, kerosene and LPG are preferred because they are readily available. In addition, they can be stored in a stand-alone manner, and therefore, they are useful in areas where the city gas pipeline is not built. Further, an SOFC power generating equipment using kerosene or LPG is useful as an emergency power supply. Particularly, kerosene is preferred because it is easy to handle.

The hydrocarbon-based fuel used as a reforming raw material may be supplied to the reformer after being desulfurized as required. Also, when the hydrocarbon-based fuel is liquid, the hydrocarbon-based fuel may be supplied to the reformer after being appropriately vaporized.

### [Reformer]

The reformer produces a reformed gas containing hydrogen from a hydrocarbon-based fuel.

In the reformer, any of steam reforming, partial oxidation reforming, and autothermal reforming in which a steam reforming reaction is accompanied by a partial oxidation reaction may be performed.

In the reformer, a steam reforming catalyst having steam reforming activity, a partial oxidation reforming catalyst having partial oxidation reforming activity, or an autothermal reforming catalyst having both partial oxidation reforming activity and steam reforming activity may be appropriately used.

With respect to the structure of the reformer, a structure publicly known as that of a reformer may be appropriately used. For example, the structure of the reformer may be a structure having a region for housing a reforming catalyst in a container which can be closed to the atmosphere, and having an introduction port for fluids required for reforming and a discharge port for a reformed gas.

The material of the reformer may be appropriately selected for use from materials publicly known as those of reformers, considering resistance characteristics in the environment used.

The shape of the reformer may be an appropriate shape, such as a rectangular solid shape or a circular tube shape.

A hydrocarbon-based fuel (vaporized beforehand as required) and steam, and further an oxygen-containing gas, such as air, as required, may be supplied to the reformer (the reforming catalyst layer), each independently, or appropriately mixed beforehand. The reformed gas is supplied to the anode of the SOFC.

The reformed gas obtained from the reformer is supplied to the anode of the SOFC. On the other hand, an oxygen-containing gas, such as air, is supplied to the cathode of the SOFC. During electric power generation, the SOFC generates heat with electric power generation, and the heat is transferred from the SOFC to the reformer by radiation heat transfer and the like. In this manner, the exhaust heat of the SOFC is used to heat the reformer. Gas interfacing or the like is appropriately performed using piping and the like.

### [SOFC]

As the SOFC, a publicly known SOFC may be appropriately selected for use. In the SOFC, generally, an oxygen-ion conductive ceramic or a proton-ion conductive ceramic is used as the electrolyte.

The SOFC may be a single cell, but practically, a stack in which a plurality of single cells are arrayed (the stack is sometimes referred to as a bundle in the case of a tubular type, and the stack in this specification includes a bundle) is preferably used. In this case, one stack or a plurality of stacks may be used.

The shape of the SOFC is also not limited to a cubic stack, and an appropriate shape may be used.

### [Enclosure]

The enclosure (module container) may be any appropriate container capable of housing the SOFC, the reformer, and the combustion region. An appropriate material having resistance characteristics to the environment used, for example, stainless steel, may be used as the material of the container. A connection port is appropriately provided for the container for gas interfacing or the like.

The module container is preferably hermetic in order to prevent communication between the interior of the module container and the surroundings (atmosphere).

### [Combustion Region]

The combustion region is a region where the anode off-gas discharged from the anode of the SOFC can be combusted. For example, the anode outlet is opened in the enclosure, and a space near the anode outlet may be the combustion region. This combustion may be performed using, for example, a cathode off-gas, as an oxygen-containing gas. In order to do this, the cathode outlet may be opened in the enclosure.

In order to combust the anode off-gas, an ignition means, such as an igniter, may be appropriately used.

### [Location of Reformer]

In the indirect internal reforming SOFC, the reformer is located at a position where the reformer can receive heat from the SOFC. In order to do this, the reformer may be located at a position where the reformer receives thermal radiation from the SOFC, and in terms of thermal energy loss, the reformer is preferably placed at a position where the reformer receives the thermal radiation most.

In the present invention, the reformer is disposed at a position where the reformer can receive combustion heat generated in the combustion region. In order to do this, the reformer may be located at a position where the reformer receives thermal radiation from the combustion region. In this case, it is preferred that there is no obstacle between the combustion region and the reformer. In other words, it is preferred that the combustion region and the reformer are opposed to each other without sandwiching an obstacle. However, necessary piping and the like are appropriately located. It is preferred that the reformer and the combustion region are disposed at positions as close as possible.

### [Reforming Catalyst]

A publicly known catalyst may be used for each of the steam reforming catalyst, the partial oxidation reforming catalyst, and the autothermal reforming catalyst that may be used in the reformer. Examples of the partial oxidation reforming catalyst include a platinum-based catalyst. Examples of the steam reforming catalyst include ruthenium-based and nickel-based catalysts. Examples of the autothermal reforming catalyst include a rhodium-based catalyst. Examples of a reforming catalyst that can promote combustion include platinum-based and rhodium-based catalysts.

A temperature at which a partial oxidation reforming reaction can proceed is, for example, 200°C or more. A temperature at which a steam reforming reaction can proceed is, for example, 400°C or more.

### [Operation Conditions of Reformer]

The conditions during rated operation of the reformer for each of steam reforming, autothermal reforming, and partial oxidation reforming will be described below.

In steam reforming, steam is added to a reforming raw material, such as kerosene. The reaction temperature of the steam reforming may be in the range of, for example, 400°C to 1000°C, preferably 500°C to 850°C, and further preferably 550°C to 800°C. An amount of the steam introduced into the reaction system is defined as a ratio of the number of moles of water molecules to the number of moles of carbon atoms contained in the hydrocarbon-based fuel (steam/carbon ratio). This value is preferably 1 to 10, more preferably 1.5 to 7, and further preferably 2 to 5. When the hydrocarbon-based fuel is liquid, a space velocity (LHSV) can be represented as A/B, wherein a flow velocity of the hydrocarbon-based fuel in a liquid state is represented as A (L/h), and a volume of the catalyst layer is represented as B (L). This value is set in the range of preferably 0.05 to 20 h⁻¹, more preferably 0.1 to 10 h⁻¹, and further preferably 0.2 to 5 h⁻¹.

In autothermal reforming, in addition to the steam, an oxygen-containing gas is added to the reforming raw material. The oxygen-containing gas may be pure oxygen, but in terms of the ease of availability, air is preferred. The oxygen-containing gas may be added so that the endothermic reaction accompanying the steam reforming reaction is balanced, and an amount of heat generation such that the temperatures of the reforming catalyst layer and the SOFC can be maintained or increased is obtained. With respect to the amount of the oxygen-containing gas added, a ratio of the number of moles of oxygen molecules to the number of moles of carbon atoms contained in the hydrocarbon-based fuel (oxygen/carbon ratio) is preferably 0.005 to 1, more preferably 0.01 to 0.75, and further preferably 0.02 to 0.6. A reaction temperature of the autothermal reforming reaction is set in the range of, for example, 400°C to 1000°C, preferably 450°C to 850°C, and further preferably 500°C to 800°C. When the hydrocarbon-based fuel is liquid, the space velocity (LHSV) is selected in the range of preferably 0.05 to 20h⁻¹, more preferably 0.1 to 10h⁻¹, and further preferably 0.2 to 5h⁻¹. With respect to an amount of the steam introduced into the reaction system, the steam/carbon ratio is preferably 1 to 10, more preferably 1.5 to 7, and further preferably 2 to 5.

In partial oxidation reforming, an oxygen-containing gas is added to the reforming raw material. The oxygen-containing gas may be pure oxygen, but in terms of the ease of availability, air is preferred. An amount of the oxygen-containing gas added is appropriately determined in terms of heat loss and the like to ensure a temperature at which the reaction proceeds. With respect to this amount, the ratio of the number of moles of oxygen molecules to the number of moles of carbon atoms contained in the hydrocarbon-based fuel (oxygen/carbon ratio) is preferably 0.1 to 3 and more preferably 0.2 to 0.7. A reaction temperature of the partial oxidation reaction may be set in the range of, for example, 450°C to 1000°C, preferably 500°C to 850°C, and further preferably 550°C to 800°C. When the hydrocarbon-based fuel is liquid, the space velocity (LHSV) is selected in the range of preferably 0.1 to 30h⁻¹. Steam can be introduced into the reaction system to suppress the generation of soot, and with respect to an amount of the steam, the steam/carbon ratio is preferably 0.1 to 5, more preferably 0.1 to 3, and further preferably 1 to 2.

### [Other Equipment]

Publicly known components of an indirect internal reforming SOFC system may be appropriately provided as required. Specific examples of the publicly known components include a vaporizer for vaporizing a liquid; pressure increasing means for pressurizing various fluids, such as a pump, a compressor, and a blower; flow rate controlling means or flow path blocking/switching means for controlling the flow rate of a fluid, or blocking/switching the flow of a fluid, such as a valve; a heat exchanger for performing heat exchange and heat recovery; a condenser for condensing a gas; heating/warming means for externally heating various equipment with steam or the like; storage means of a hydrocarbon-based fuel (reforming raw material) and a combustion fuel; an air or electrical system for instrumentation; a signal system for control; a control device; and an electrical system for output and powering; a desulfurizer for reducing a sulfur concentration in a fuel; and the like.

### Industrial Applicability

The present invention can be applied to an indirect internal reforming SOFC system used for, for example, a stationary or mobile power generating equipment and a cogeneration system.

### Description of Symbols

- 1: enclosure
- 2: reformer
- 3: solid oxide fuel cell
- 4: combustion region
- 5: solid oxide fuel cell output controlling means
- 6: external demand electric power site
- 7: reforming catalyst layer
- 8: solid oxide fuel cell electric power generation output value sensing means
- 9: reforming catalyst layer temperature sensing means
- 10: external demand electric power sensing means
- 11: internal demand electric power sensing means
- 12: indirect internal reforming solid oxide fuel cell system

## Claims

1. A method for operating an indirect internal reforming solid oxide fuel cell system (12) comprising:
a reformer (2) comprising a reforming catalyst layer (7), for producing a reformed gas from a hydrocarbon-based fuel,
a solid oxide fuel cell (3) for generating electric power using the reformed gas obtained in the reformer, and
a combustion region (4) for combusting an anode off-gas discharged from the solid oxide fuel cell,
wherein the reformer (2) is disposed at a position where the reformer (2) can receive combustion heat generated in the combustion region (4) and heat from the solid oxide fuel cell (3),
the method comprising a step of controlling a temperature of the reforming catalyst layer (7) by changing an electric power generation output value of the solid oxide fuel cell (3), and
wherein the step of controlling a temperature of the reforming catalyst layer (7) comprises:
a step of increasing temperature of the reforming catalyst layer (7) by setting an electric power generation output value of the solid oxide fuel cell (3) to a value lower than a constant value when the temperature of the reforming catalyst layer (7) falls below a lower limit temperature required for the reforming, in a case where the electric power generation output value of the solid oxide fuel cell (3) is scheduled to be set to the constant value.

2. A method for operating an indirect internal reforming solid oxide fuel cell system (12) comprising:
a reformer (2) comprising a reformer catalyst layer (7), for producing a reformed gas from a hydrocarbon-based fuel,
a solid oxide fuel cell (3) for generating electric power using the reformed gas obtained in the reformer (2), and
a combustion region (4) for combusting an anode off-gas discharged from the solid oxide fuel cell (3),
wherein the reformer (2) is disposed at a position where the reformer (2) can receive combustion heat generated in the combustion region (4) and heat from the solid oxide fuel cell (3),
the method comprising a step of controlling a temperature of the reforming catalyst layer (7) by changing an electric power generation output value of the solid oxide fuel cell (3), and
wherein the step of controlling a temperature of the reforming catalyst layer (7) comprises:
a step of increasing a temperature of the reforming catalyst layer (7) by keeping an electric power generation output value of the solid oxide fuel cell (3) at an electric power generation output value P* which is obtained when the temperature of the reforming catalyst layer (7) falls below a lower limit temperature required for the reforming, or by setting the electric power generation output value of the solid oxide fuel cell (3) to a value lower than the electric power generation output value P* when the temperature of the reforming catalyst layer (7) falls below the lower limit temperature required for the reforming, in a case where the electric power generation output value of the solid oxide fuel cell (3) is scheduled to be increased with time.

3. The method according to Claim 1 or 2, comprising:
increasing the electric power generation output value of the solid oxide fuel cell (3), when the temperature of the reforming catalyst layer (7) becomes equal to or higher than a temperature, that is obtained by adding a predetermined temperature margin to the lower limit temperature, by said step of increasing the temperature of the reforming catalyst layer (7).

## Patentansprüche

1. Ein Verfahren zum Betreiben eines Festoxidbrennstoffzellensystems mit indirektem internen Reformer (12), aufweisend:
einen Reformer (2), aufweisend eine Reformerkatalysatorschicht (7) zur Herstellung eines Reformergases aus einem kohlenwasserstoffbasierten Brennstoff,
eine Festoxidbrennstoffzelle (3) zur Erzeugung von elektrischem Strom unter Verwendung des im Reformer erhaltenen Reformergases, und
eine Verbrennungsregion (4) zur Verbrennung eines Anodenabgases, das aus der Festoxidbrennstoffzelle abgeführt wird,
wobei der Reformer (2) in einer Position angeordnet ist, in welcher der Reformer (2) Verbrennungswärme empfangen kann, die in der Verbrennungsregion (4) erzeugt wird, und Wärme aus der Festoxidbrennstoffzelle (3),
wobei das Verfahren einen Schritt umfasst, dass man eine Temperatur der Reformerkatalysatorschicht (7) steuert, indem man einen Leistungsabgabewert der elektrischen Stromerzeugung der Festoxidbrennstoffzelle (3) ändert, und
wobei der Schritt der Temperatursteuerung der Reformerkatalysatorschicht (7) aufweist:
einen Schritt der Temperaturerhöhung der Reformerkatalysatorschicht (7), indem man einen Leistungsabgabewert der elektrischen Stromerzeugung der Festoxidbrennstoffzelle (3) auf einen Wert setzt, welcher niedriger ist als ein konstanter Wert, wenn die Temperatur der Reformerkatalysatorschicht (7) unter eine untere Grenzwerttemperatur fällt, welche für das Reformieren erforderlich ist, für einen Fall, wo der Leistungsabgabewert der elektrischen Stromerzeugung der Festoxidbrennstoffzelle (3) planmäßig auf den konstanten Wert zu setzen ist.

2. Verfahren zum Betreiben eines Festoxidbrennstoffzellensystems (12) mit indirektem internen Reformer, umfassend:
einen Reformer (2), aufweisend eine Reformerkatalysatorschicht (7) zur Herstellung eines Reformergases aus einem kohlenwasserstoffbasierten Brennstoff, eine Festoxidbrennstoffzelle (3) zur Erzeugung von elektrischem Strom unter Verwendung des Reformergases, das im Reformer (2) erhalten wurde, und
eine Verbrennungsregion (4) zur Verbrennung eines Anodenabgases, das aus der Festoxidbrennstoffzelle (3) abgeführt wird,
wobei der Reformer (2) in einer Position angeordnet ist, wo der Reformer (2) in der Verbrennungsregion (4) erzeugte Verbrennungswärme empfangen kann und Wärme aus der Festoxidbrennstoffzelle (3), wobei das Verfahren einen Schritt umfasst, dass man die Temperatur der Reformerkatalysatorschicht (7) steuert, indem man einen Leistungsabgabewert der elektrischen Stromerzeugung der Festoxidbrennstoffzelle (3) ändert, und
wobei der Schritt der Temperaturkontrolle der Reformerkatalysatorschicht (7) umfasst:
einen Schritt, dass man eine Temperatur der Reformerkatalysatorschicht (7) erhöht, indem man einen Leistungsabgabewert der elektrischen Stromerzeugung der Festoxidbrennstoffzelle (3) auf einem Leistungsabgabewert P* der elektrischen Stromerzeugung hält, der erhalten wird, wenn die Temperatur der Reformerkatalysatorschicht (7) unter ein unteres Temperaturlimit fällt, das zum Reformieren erforderlich ist oder indem man den Leistungsabgabewert der elektrischen Stromerzeugung der Festoxidbrennstoffzelle (3) auf einen Wert setzt, der niedriger ist als der Leistungsabgabewert P* der elektrischen Stromerzeugung, wenn die Temperatur der Reformerkatalysatorschicht (7) auf einen Wert unterhalb des unteren Temperaturlimits fällt, das für das Reformieren erforderlich ist, in einem Fall, bei dem der Leistungsabgabewert der elektrischen Stromerzeugung der Festoxidbrennstoffzelle (3) planmäßig mit der Zeit zu erhöhen ist.

3. Verfahren nach Anspruch 1 oder 2, aufweisend:
Erhöhung des Leistungsabgabewertes der elektrischen Stromerzeugung der Festoxidbrennstoffzelle (3), wenn die Temperatur der Reformerkatalysatorschicht (7) gleich oder höher wird als eine Temperatur, welche erhalten wird, indem man einen vorbestimmten Temperaturgrenzbereich zu dem unteren Temperaturlimit hinzuaddiert, durch den genannten Schritt, dass man die Temperatur der Reformerkatalysatorschicht (7) erhöht.

## Revendications

1. Procédé de commande d'un système de pile à combustible à oxyde solide à reformage interne indirect (12) comprenant :
un reformeur (2) comprenant une couche de catalyseur de reformage (7), pour la production d'un gaz de reformage à partir d'un combustible à base d'hydrocarbure,
une pile à combustible à oxyde solide (3) pour la génération d'une puissance électrique au moyen du gaz de reformage obtenu dans le reformeur, et
une région de combustion (4) pour la combustion d'un gaz de dégagement d'anode déchargé de la pile à combustible à oxyde solide,
dans lequel le reformeur (2) est disposé à une position où le reformeur (2) peut recevoir la chaleur de combustion générée dans la région de combustion (4) et la chaleur provenant de la pile à combustible à oxyde solide (3),
le procédé comprenant une étape de régulation d'une température de la couche de catalyseur de reformage (7) par la modification d'une valeur de sortie de génération de puissance électrique de la pile à combustible à oxyde solide (3), et
dans lequel l'étape de régulation d'une température de la couche de catalyseur de reformage (7) comprend :
une étape d'augmentation de la température de la couche de catalyseur de reformage (7) en fixant une valeur de sortie de génération de puissance électrique de la pile à combustible à oxyde solide (3) à une valeur inférieure à une valeur constante quand la température de la couche de catalyseur de reformage (7) descend en dessous d'une température limite inférieure nécessaire pour le reformage, dans une situation où il est prévu que la valeur de sortie de génération de puissance électrique de la pile à combustible à oxyde solide (3) soit fixée à la valeur constante.

2. Procédé de commande d'un système de pile à combustible à oxyde solide à reformage interne indirect (12) comprenant :
un reformeur (2) comprenant une couche de catalyseur de reformeur (7), pour la production d'un gaz de reformage à partir d'un combustible à base d'hydrocarbure,
une pile à combustible à oxyde solide (3) pour la génération d'une puissance électrique au moyen du gaz de reformage obtenu dans le reformeur (2), et
une région de combustion (4) pour la combustion d'un gaz de dégagement d'anode déchargé de la pile à combustible à oxyde solide (3),
dans lequel le reformeur (2) est disposé à une position où le reformeur (2) peut recevoir la chaleur de combustion générée dans la région de combustion (4) et la chaleur provenant de la pile à combustible à oxyde solide (3),
le procédé comprenant une étape de régulation d'une température de la couche de catalyseur de reformage (7) par la modification d'une valeur de sortie de génération de puissance électrique de la pile à combustible à oxyde solide (3), et
dans lequel l'étape de régulation d'une température de la couche de catalyseur de reformage (7) comprend :
une étape d'augmentation d'une température de la couche de catalyseur de reformage (7) en maintenant une valeur de sortie de génération de puissance électrique de la pile à combustible à oxyde solide (3) à une valeur de sortie P* de génération de puissance électrique qui est obtenue quand la température de la couche de catalyseur de reformage (7) descend en dessous d'une température limite inférieure nécessaire pour le reformage, ou en fixant la valeur de sortie de génération de puissance électrique de la pile à combustible à oxyde solide (3) à une valeur inférieure à une valeur de sortie P* de génération de puissance électrique quand la température de la couche de catalyseur de reformage (7) descend en dessous d'une température limite inférieure nécessaire pour le reformage, dans une situation où il est prévu que la valeur de sortie de génération de puissance électrique de la pile à combustible à oxyde solide (3) augmente au cours du temps.

3. Procédé selon la revendication 1 ou 2, comprenant :
l'augmentation de la valeur de sortie de génération de puissance électrique de la pile à combustible à oxyde solide (3) quand la température de la couche de catalyseur de reformage (7) est supérieure ou égale à une température qui est obtenue par l'ajout d'une marge de température prédéterminée à la température limite inférieure, par ladite étape d'augmentation de la température de la couche de catalyseur de reformage (7).
